Europäisches Patentamt

**European Patent Office**

**Office européen des brevets**

(11) Numéro de publication : **0 022 796**
**B1**

# FASCICULE DE BREVET EUROPÉEN

(12)

(45) Date de publication du fascicule du brevet :
**03.11.82**

(21) Numéro de dépôt : **80900043.3**

(22) Date de dépôt : **13.12.79**

(86) Numéro de dépôt international :
**PCT/FR 79/00124**

(87) Numéro de publication internationale :
**WO WO/80013 (10.07.80 Gazettee 80/15)**

(51) Int. Cl.³ : **B 23 Q 1/16**

(54) **BROCHE PORTE-OUTIL POUR USINAGE DE PRECISION.**

(30) Priorité : **08.01.79 FR 7900310**

(43) Date de publication de la demande :
**28.01.81 (Bulletin 81/04)**

(45) Mention de la délivrance du brevet :
**03.11.82 Bulletin 82/44**

(84) Etats contractants désignés :
**AT CH DE FR GB LU NL SE**

(56) Documents cités :
**DE A 2 717 907**
**DE B 1 049 192**
**DE B 1 256 998**
**FR A 562 738**
**GB A 926 072**
**US A 2 065 173**
**US A 2 823 591**

(73) Titulaire : **Harmand, Pierre**
**9 rue Malaz**
**74600 Seynod (FR)**

(72) Inventeur : **Harmand, Pierre**
**9 rue Malaz**
**74600 Seynod (FR)**

(74) Mandataire : **Loyer, Jean Marius Louis et al**
**Cabinet Dupuy & Loyer 14, rue La Fayette**
**F-75009 Paris (FR)**

Imprimerie Jouve, 18, rue St-Denis, 75001 Paris, France

Broche porte-outil pour usinage de précision

### Domaine technique

L'invention se rapporte à des broches porte-outils comme celles des perceuses, aléseuses, rectifieuses, etc. et conçues pour permettre des travaux précis sur les pièces à usiner, et plus particulièrement à des broches porte-outils pour rectifieuses de siège de soupape.

### Technique antérieure

Les broches actuelles comportent soit un fourreau fixé, soit un fourreau oscillant bloqué par des moyens mécaniques, comme c'est le cas de la broche décrite dans le brevet français n° 562 738 déposé par MONPAIN, le 27.2.23.

Ces moyens ont l'inconvénient de conduire à un positionnement par tâtonnements insuffisamment précis.

Le brevet GB-A-926 072 décrit une broche oscillante grâce à une tête sphérique susceptible de se mouvoir entre un siège fixe et un siège mobile porté par un piston soumis à l'action d'un fluide hydraulique.

Dans ce mode de réalisation, ledit fluide n'intervient que pour produire l'immobilisation de la tête sphérique entre les deux sièges.

En définitive, la mise en place reste essentiellement manuelle et doit vaincre l'inertie de l'ensemble de la broche. Or, dans les machines du type en cause, la broche, son fourreau ainsi que la transmission de mouvement et sa commande atteignent le poids de 1373 N (140 kg) rendant tout positionnement manuel précis impossible en raison de l'importance des frottements.

La présente invention se propose d'éliminer ces frottements intensifs en vue d'obtenir un positionnement de très grande précision de la broche dans n'importe quel plan compatible avec la construction de l'ensemble, et ce, avec une pression de moins 98 Pa. (1 g/cm$^2$).

### Exposé de l'invention

Pour atteindre ce but, l'invention qui utilise également une broche dont le fourreau comporte une noix sphérique placée entre un siège mobile et un siège fixe, ladite noix étant alternativement soit immobilisée par pression du siège mobile soumis à un premier circuit d'un fluide gazeux, soit libérée de cette pression par inversion dudit circuit et soulevée par un deuxième circuit gazeux. Dans ce cas, ladite noix se trouve placée sur un coussin gazeux qui l'enveloppe, le gaz pouvant s'échapper par des fuites réalisées entre noix et sièges.

De cette manière, la broche ne présente plus aucune inertie et peut prendre toute position angulaire désirée.

### Brève description des dessins

D'autres particularités et avantages apparaîtront à la lecture de la description et des revendications qui suivent, faîtes en regard du dessin annexé, sur lequel la figure 1 montre schématiquement une broche selon l'invention appliquée à une machine à rectifier les sièges de soupape, la figure 2 est une coupe de cette broche en position d'immobilisation tandis que la figure 3 représente la même broche pendant la période où elle frotte entre les deux sièges.

### Meilleure manière de réaliser l'invention

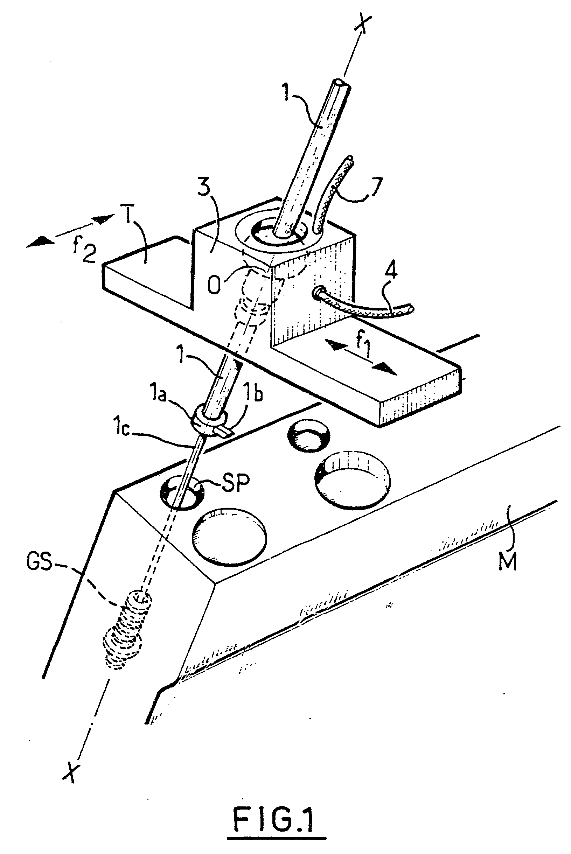

Comme on le voit sur la figure 1, cette broche (1) pourvue du porte-outil (1a), auquel est fixé l'outil (1b) doit prendre toute position convenable pour que la tige pilote (1c) qui prolonge le porte-outil puisse s'introduire dans le guide (GS) de la soupape du moteur (M) dont on veut rectifier un siège (SP) de soupape.

D'une manière classique, la tête porte broche (ici référencée par celle du boîtier (3)) est soumise aux déplacements alternatifs, dans un plan horizontal selon les flèches (f1) et (f2), de la table (T) de laquelle elle est solidaire.

Ces déplacements qui peuvent être mécaniques, hydrauliques, ou pneumatiques, ont pour objet d'amener le centre (O) de la broche de manière que son axe (x-x) soit dans le prolongement de l'axe du guide (GS) du guide de la soupape du moteur (M) dont on veut rectifier le siège (SP).

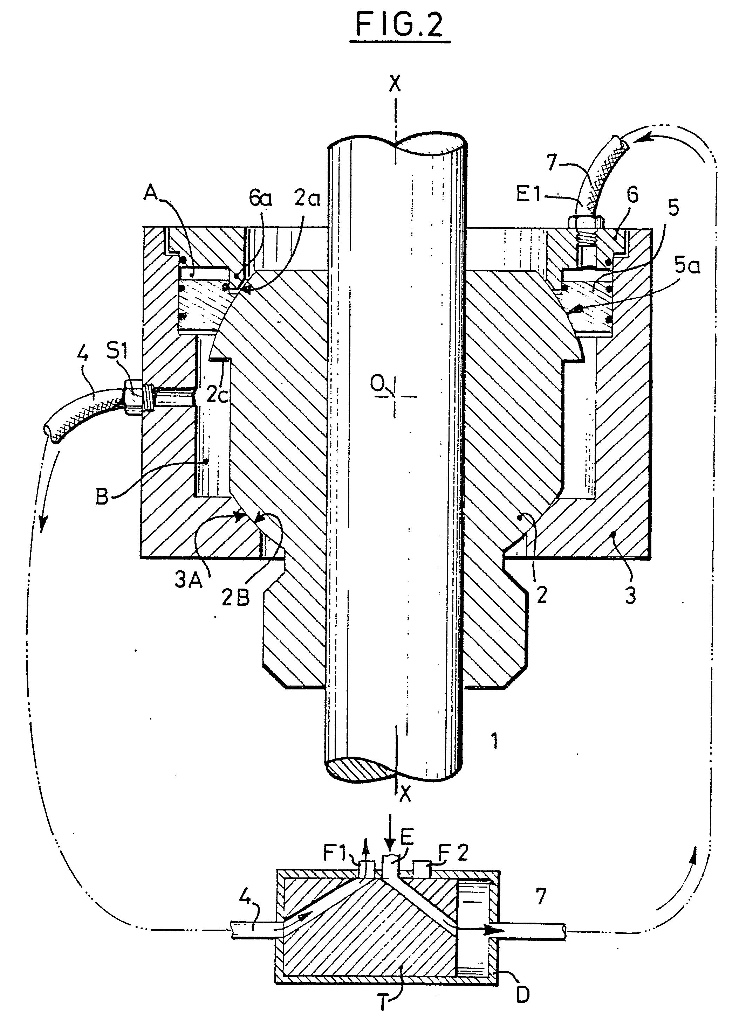

Si l'on se reporte à la figure 2, on voit que la broche (1) coulisse et se déplace dans le fourreau (2) comportant une noix ayant deux parties sphériques (2a-2b). Cette noix est enfermée dans le boîtier (3), asservi aux déplacements de la table (T) comme il vient d'être dit selon les flèches (f1 et f2), ledit boîtier (3) sert de cylindre à un piston (5).

La partie inférieure de ce boîtier (3) comporte une partie concave de sphéricité adéquate pour constituer le siège fixe (3a) sur lequel peut venir reposer la partie sphérique inférieure (2b) de la noix du fourreau (2).

En outre, le piston (5) comporte lui aussi une partie concave de sphéricité adéquate pour venir appliquer contre la partie sphérique supérieure de la noix du fourreau (2) et lui servir de siège mobile.

Le cylindre est complété par un fond (6) pourvu d'une saillie (6a) dirigée vers l'intérieur du cylindre et servant de butée limitant le déplacement du piston vers le haut, ledit fond (6) recevant une canalisation (7).

A l'intérieur du bâti (3) existe deux chambres : une chambre supérieure (A) entre piston (5) et fond (6) et une chambre inférieure (B) entre piston (5) et siège (3a). Cette chambre (B) est en communication avec une canalisation (4).

La noix du fourreau (2) comporte un redan (2c) situé à un niveau inférieur au niveau du piston (5).

Lorsqu'on admet de l'air par la canalisation (7), celui-ci pousse le piston (5) vers le bas, ce qui a pour effet d'appliquer fortement le siège mobile du piston (5) contre la partie sphérique supérieure (2a) de la noix du fourreau (2) et par corollaire de bloquer cette noix sur son siège.

Pour modifier la position angulaire du fourreau (2), il est nécessaire de libérer sa noix de la contrainte produite par le siège mobile du piston (5). A cet effet, la canalisation (7) est mise à l'air libre, l'air sous pression est introduit en (4), il pousse vers le haut le piston (5) jusqu'à la butée (6a) et il soulève la noix en agissant sur le redan (2c).

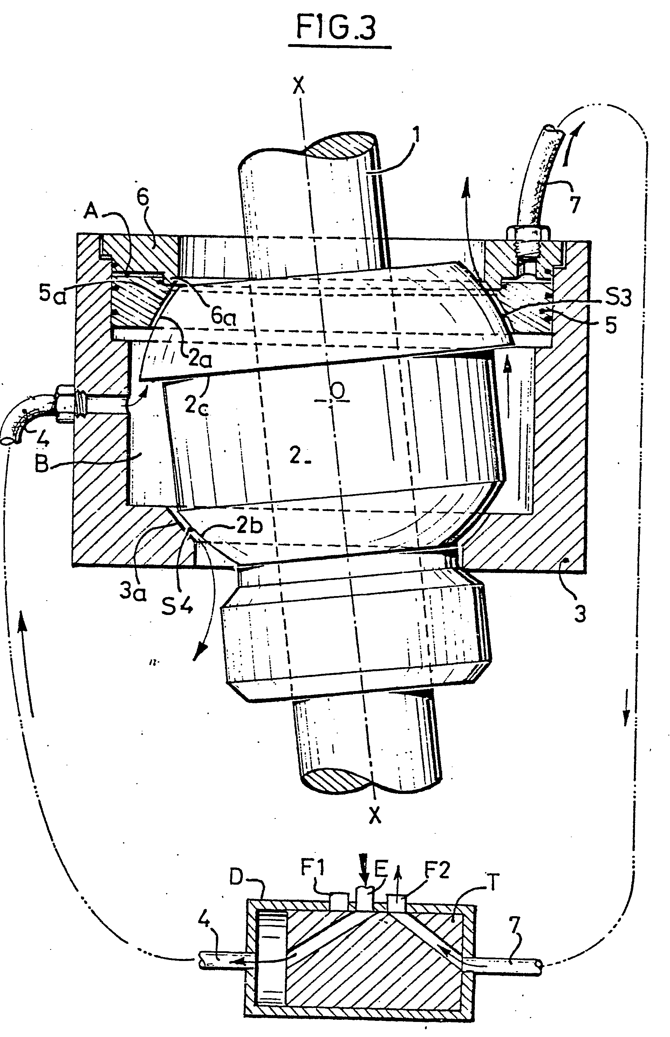

De cette manière, la noix est libérée de toute contrainte (voir la figure 3) l'air introduit en (4) s'échappe par les fuites (S3 et S4) réalisées entre les parties sphériques (2a-2b) et respectivement les sièges (5a et 3a) du fait que la noix, portée par le coussin formé par l'air, flotte à l'intérieur du bâti (3). Il s'ensuit que la noix sans aucun effort, aligne son axe (x-x) avec l'axe du guide (GS), il suffit de mettre (4) à l'air libre et d'admettre à nouveau l'air sous pression par (7) pour obtenir le blocage de la noix, sans aucun à-coup perturbateur.

Cette inversion du sens de déplacement de l'air est assurée par un distributeur (D) à tiroir du type classique, alimenté par une canalisation (E) venant du ballon d'air sous pression. Deux sorties (F1-F2) assurent alternativement la mise à l'air libre.

Sur la figure 2 c'est la canalisation (7) qui est alimentée à partir de (E) et la canalisation (4) qui est reliée à l'air libre. Sur la figure 3 c'est le contraire.

## Revendications

1. Broche porte-outil pour machine d'usinage de haute précision, asservie à une table (T) ayant des possibilités de déplacements alternatifs dans le plan horizontal selon deux directions perpendiculaires (f1, f2), ladite broche (1) coulissant dans un fourreau (2) pourvu d'une noix sphérique d'orientation placée entre deux sièges de sphéricité concave complémentaire, l'un (3a) de ces sièges étant fixe et l'autre (5a) mobile par rapport à la table (T), et des moyens (6), pour déplacer le siège mobile, agissant dans le sens du blocage de la noix sphérique du fourreau (2) entre les deux sièges, caractérisée en ce que, d'une part, elle comprend en outre des moyens pneumatiques (4) agissant sur le siège mobile (5a) dans le sens du déblocage, et que d'autre part, ladite noix sphérique (2a, 2b) ou toute pièce dont elle serait solidaire est pourvue d'une saillie ou redan (2c) soumis au flux de l'air de ces derniers moyens pneumatiques (4) pendant la phase de déblocage, de manière à ce que pendant cette période, la noix sphérique soit portée par un coussin d'air.

2. Broche selon la revendication 1, et dans laquelle le siège mobile (5) est porté par un piston (5), se déplaçant à l'intérieur d'un cylindre, caractérisée en ce que ce cylindre (3) est alimenté alternativement par ses deux extrémités (4, 7).

3. Broche selon la revendication 2, caractérisée en ce que l'arrivée d'air (4) servant au déblocage est située dans le cylindre à la seconde extrémité de celui-ci, cette seconde arrivée étant alimentée au travers d'un distributeur alternatif à tiroir (D) quand la première arrivée (7) cesse de l'être, de façon à soulever le piston (5) et la noix (2a, 2b) de manière à ce que cette dernière soit portée par le coussin d'air se formant autour de ladite noix.

## Claims

1. Tool-holder spindle for a high precision machine tool controlled by a table (T) which may be displaced in an alternating manner in the horizontal plane in two perpendicular directions (f1, f2), the said spindle sliding in a sleeve (2) provided with a spherical orientating element disposed between two complementary concave spherical seats, one (3a) of these seats being fixed and th~ other (5a) being movable with respect to the table (T) and means (6) for displacing the movable seat which act in the direction of locking of the spherical element of the sleeve (2) between the two seats, characterised in that, on one hand, it further comprises pneumatic means (4) acting on the movable seat (5a) in the direction of release and in that, on the other hand, the said spherical element (2a, 2b) or any component with which it is rigid is provided with a projection or shoulder (2c) subjected to the flow of air from these pneumatic means (4) during the release stage such that during this period the spherical element is supported on a cushion of air.

2. A spindle as claimed in claim 1, and in which the movable seat (5) is supported by a piston (5) which is displaced within a cylinder, characterised in that this cylinder (3) has its two ends (4, 7) supplied in an alternating manner.

3. A spindle as claimed in claim 2, characterised in that the air inlet (4) effecting release is located in the cylinder at its second end, this second inlet being supplied from an alternating slide distributor (D) when the first inlet (7) is no longer being supplied, so as to raise the piston (5) and the element (2a, 2b) such that the latter is supported by the cushion of air forming about the said element.

## Ansprüche

1. Werkzeughalterspindel für Bearbeitungsmaschinen hoher Präzision, zugehörig zu einem Tisch (T), der die Möglichkeit zu verschiedenen Verschiebungen in der horizontalen Ebene gemäß zwei senkrecht aufeinander stehenden Richtungen (f1, f2) hat, wobei die obige Spindel (1) in einer Hülse (2) gleitet, die mit einer sphärischen Schwenkungsnuß versehen ist, welche zwischen zwei Lagern entsprechender konkaver Sphärizität angeordnet ist, wobei das eine dieser Lager (3a) fest und das andere (5a) beweglich ist, und Mittel (6), um das bewegliche Lager zu verschieben, die als Sperre der sphärischen Nuß der Hülse (2)

zwischen den beiden Lagern wirken, dadurch gekennzeichnet, daß sie einerseits pneumatische Mittel (4) aufweist, die auf das bewegliche Lager (5a) zum Entsperren wirken und daß andererseits die obige sphärische Nuß (2a, 2b) oder jegliches Teil, das mit ihr fezt verbunden ist, mit einem Nocken oder einer Stufe (2c) versehen ist, der während der Entsperrphase dem Luftstrom dieser pneumatischen Mittel (4) so unterworfen ist, daß die sphärische Nuß während dieser Zeit von einem Luftkissen getragen wird.

2. Spindel gemäß Anspruch 1, in der das bewegliche Lager (5a) von einem sich innerhalb eines Zylinders verschiebenden Kolben getragen wird, dadurch gekennzeichnet, daß dieser Zylinder (3) entweder von dem einen oder von dem anderen Ende (4, 7) her gespeist wird.

3. Spindel gemäß Anspruch 2, dadurch gekennzeichnet, daß der zur Entsperrung dienende Luftzutritt (4) am zweiten Ende des Zylinders angeordnet ist, wobei dieser Luftzutritt über einen Steuerschieber (D), der nur die eine oder die andere Strömungsrichtung zuläßt, gespeist wird, wenn der erste Luftzutritt (7) nicht mehr gespeist wird, so daß der Kolben (5) und die Nuß (2a, 2b) gehoben werden, so daß die letztere von einem sich um die oblige Nuß herum bildenden Luftkissen getragen wird.

## FIG.1

# FIG.2

# FlG.3